# EUROPEAN PATENT APPLICATION

(11) **EP 4 742 046 A1**
(43) Date of publication of application: **13.05.2026**
(21) Application number: 25208520.4
(22) Date of filing: 14.10.2025
(51) Int. Cl.: G06F 11/3668, G06F 11/3698

(54) **SYSTEM, METHOD, AND COMPUTER PROGRAM FOR DESIGNING A TEST ENVIRONMENT**

(30) Priority: 07.11.2024 US 202418939681
(71) Applicant: TOYOTA JIDOSHA KABUSHIKI KAISHA, Toyota-shi, Aichi-ken 471-8571 (JP)
(72) Inventor: CHEN, Beck, Tokyo, 103-0022 (JP); POZIMENKO, Alexey, California, 94304 (US); BACHELOR, Benjamin, California, 94304 (US); WEBB, Edwin, California, 94304 (US); JAISHANKER, Vijay Saravana, California, 94304 (US); KANDRU, Nischel, California, 94304 (US); WU, Hao, California, 94304 (US); REED, Sheldon Anthony, California, 94304 (US); BHATKHANDE, Pranav Suhas, California, 94304 (US); WANG, Xiaoyu, Tokyo, 103-0022 (JP); TSUKISHIMA, Ruriko, Tokyo, 103-0022 (JP); ARMELLINI, Nicola, Tokyo, 103-0022 (JP); AKIYAMA, Jun, Tokyo, 103-0022 (JP)
(74) Representative: D Young & Co LLP

(57) **Abstract**

Provided are system, method, and device for testing a vehicle software. According to example embodiments, the system may include: a memory storage storing computer-executable instructions; and at least one processor communicatively coupled to the memory storage, wherein the at least one processor may be configured to execute the instructions to: obtain a configuration data of a vehicle; determine a plurality of vehicle elements associated with the vehicle based on the obtained configuration data; determine a connection between one of the plurality of vehicle elements and another of the plurality of vehicle elements based on the obtained configuration data; and display the determined plurality of vehicle elements and the determined connection in a graphical user interface.

## Description

### TECHNICAL FIELD

Systems, methods, and computer programs consistent with example embodiments of the present disclosure relate to a vehicle software testing, and more specifically, relate to the designing of a test environment in a vehicle software testing.

### BACKGROUND

In software development, a software is required to be tested in order to ensure that the software functions as intended, meets specified requirements, and performs reliably in various scenarios. Software testing is a crucial part of the software development life cycle (SDLC) and is performed to identify defects, errors, or bugs in the software before it is deployed to the actual system.

Testing of a software for a vehicle may be done by designing a test case comprising a plurality of test steps that are to be run within a test environment. The results of running the test case within the test environment may then be generated and viewed by a user in order to evaluate the software.

In the related art, designing a test environment that a test case is to be run on may be done by manually creating one or more elements in the test environment, as well as manually defining their configurations and interfaces. Such processes may be time consuming and error pone. Accordingly, there is a need for a system that can allow the user to quickly and efficiently create the elements in the test environment, as well as define their configurations and interfaces.

### SUMMARY

Example embodiments of the present disclosure tests vehicle software. As such, example embodiments of the present disclosure provide a process that allows a user to quickly and efficiently create elements in the test environment, as well as provide a graphical user interface that allows the user to quickly add, edit, and remove elements of the test environment and to quickly define interactions between said elements, thereby reducing the time required to design the test environment.

According to example embodiments, a system is provided. The system may include: a memory storage storing computer-executable instructions; and at least one processor communicatively coupled to the memory storage, wherein the at least one processor may be configured to execute the instructions to: obtain a configuration data of a vehicle; determine a plurality of vehicle elements associated with the vehicle based on the obtained configuration data; determine a connection between one of the plurality of vehicle elements and another of the plurality of vehicle elements based on the obtained configuration data; and display the determined plurality of vehicle elements and the determined connection in a graphical user interface.

According to example embodiments, the graphical user interface may include at least a first portion and a second portion; the first portion may include the determined plurality of vehicle elements and the determined connection; the second portion may include a plurality of predefined elements; and the at least one processor may be further configured to execute the instructions to: receive a selection input selecting one of the plurality of predefined elements from a user; and in response to receiving the selection input, display the selected one of the plurality of predefined elements at the first portion.

According to example embodiments, the at least one processor may be further configured to execute the instructions to: receive, from the user, a connection input connecting an element displayed at the first portion to another element displayed at the first portion; and in response to receiving the connection input, connect the element displayed at the first portion to another element displayed at the first portion.

According to example embodiments, the plurality of predefined elements may include a plurality of predefined elements associated with an environment of a vehicle and/or a plurality of predefined vehicle elements.

According to example embodiments, the plurality of vehicle elements may include a plurality of electronic control units associated with a type of vehicle.

According to example embodiments, the graphical user interface may include a vehicle selector; and the vehicle selector may include a plurality of vehicles selectable by a user.

According to example embodiments, the at least one processor may be further configured to execute the instructions to: obtain a plurality of configuration data of the plurality of vehicles; and receive a selection input selecting one of the plurality of vehicles at the vehicle selector from the user; where the determined plurality of vehicle elements and the determined connection may be associated with the selected one of the plurality of vehicles.

According to example embodiments, a method is provided. The method may include: obtaining a configuration data of a vehicle; determining a plurality of vehicle elements associated with the vehicle based on the obtained configuration data; determining a connection between one of the plurality of vehicle elements and another of the plurality of vehicle elements based on the obtained configuration data; and displaying the determined plurality of vehicle elements and the determined connection in a graphical user interface.

According to example embodiments, the graphical user interface may include at least a first portion and a second portion; the first portion may include the determined plurality of vehicle elements and the determined connection; the second portion may include a plurality of predefined elements; and the method may further include: receiving a selection input selecting one of the plurality of predefined elements from a user; and in response to receiving the selection input, displaying the selected one of the plurality of predefined elements at the first portion.

According to example embodiments, the method may further include: receiving, from the user, a connection input connecting an element displayed at the first portion to another element displayed at the first portion; and in response to receiving the connection input, connecting the element displayed at the first portion to another element displayed at the first portion.

According to example embodiments, the plurality of predefined elements may include a plurality of predefined elements associated with an environment of a vehicle and/or a plurality of predefined vehicle elements.

According to example embodiments, the plurality of vehicle elements may include a plurality of electronic control units associated with a type of vehicle.

According to example embodiments, the graphical user interface may include a vehicle selector; and the vehicle selector may include a plurality of vehicles selectable by a user.

According to example embodiments, the method may further include: obtaining a plurality of configuration data of the plurality of vehicles; and receiving a selection input selecting one of the plurality of vehicles at the vehicle selector from the user; where the determined plurality of vehicle elements and the determined connection may be associated with the selected one of the plurality of vehicles.

According to example embodiments, a non-transitory computer-readable recording medium is provided. The non-transitory computer-readable recording medium may have recorded thereon instructions executable by at least one processor to cause the at least one processor to perform a method including: obtaining a configuration data of a vehicle; determining a plurality of vehicle elements associated with the vehicle based on the obtained configuration data; determining a connection between one of the plurality of vehicle elements and another of the plurality of vehicle elements based on the obtained configuration data; and displaying the determined plurality of vehicle elements and the determined connection in a graphical user interface.

According to example embodiments, the graphical user interface may include at least a first portion and a second portion; the first portion may include the determined plurality of vehicle elements and the determined connection; the second portion may include a plurality of predefined elements; and the method may further include: receiving a selection input selecting one of the plurality of predefined elements from a user; and in response to receiving the selection input, displaying the selected one of the plurality of predefined elements at the first portion.

According to example embodiments, the method may further include: receiving, from the user, a connection input connecting an element displayed at the first portion to another element displayed at the first portion; and in response to receiving the connection input, connecting the element displayed at the first portion to another element displayed at the first portion.

According to example embodiments, the plurality of predefined elements may include a plurality of predefined elements associated with an environment of a vehicle and/or a plurality of predefined vehicle elements.

According to example embodiments, the plurality of vehicle elements may include a plurality of electronic control units associated with a type of vehicle.

According to example embodiments, the graphical user interface may include a vehicle selector; and the vehicle selector may include a plurality of vehicles selectable by a user.

According to example embodiments, the method may further include: obtaining a plurality of configuration data of the plurality of vehicles; and receiving a selection input selecting one of the plurality of vehicles at the vehicle selector from the user; where the determined plurality of vehicle elements and the determined connection may be associated with the selected one of the plurality of vehicles.

Additional aspects will be set forth in part in the description that follows and, in part, will be apparent from the description, or may be realized by practice of the presented embodiments of the disclosure.

### BRIEF DESCRIPTION OF THE DRAWINGS

Features, advantages, and significance of exemplary embodiments of the disclosure will be described below with reference to the accompanying drawings, in which like signs denote like elements, and wherein:
FIG. 1 illustrates a block diagram of example components in a Vehicle Software Testing (VST) system, according to one or more embodiments;
FIG. 2 illustrates example components of a graphical user interface (GUI) for testing a vehicle software, according to one or more embodiments;
FIG. 3 illustrates example components of a first portion of a graphical user interface (GUI) for testing a vehicle software, according to one or more embodiments; and
FIG. 4 illustrates a flow diagram of an example method for testing a vehicle software, according to one or more embodiments.

### DETAILED DESCRIPTION

The following detailed description of example embodiments refers to the accompanying drawings. The same reference numbers in different drawings may identify the same or similar elements.

The foregoing disclosure provides illustration and description but is not intended to be exhaustive or to limit the implementations to the precise form disclosed. Modifications and variations are possible in light of the above disclosure or may be acquired from practice of the implementations. Further, one or more features or components of one embodiment may be incorporated into or combined with another embodiment (or one or more features of another embodiment). Additionally, in the flowcharts and descriptions of operations provided below, it is understood that one or more operations may be omitted, one or more operations may be added, one or more operations may be performed simultaneously (at least in part), and the order of one or more operations may be switched.

It will be apparent that systems and/or methods, described herein, may be implemented in different forms of hardware, firmware, or a combination of hardware and software. The actual specialized control hardware or software code used to implement these systems and/or methods is not limiting of the implementations. Thus, the operation and behavior of the systems and/or methods were described herein without reference to specific software code. It is understood that software and hardware may be designed to implement the systems and/or methods based on the description herein.

Even though particular combinations of features are recited in the claims and/or disclosed in the specification, these combinations are not intended to limit the disclosure of possible implementations. In fact, many of these features may be combined in ways not specifically recited in the claims and/or disclosed in the specification. Although each dependent claim listed below may directly depend on only one claim, the disclosure of possible implementations includes each dependent claim in combination with every other claim in the claim set.

No element, act, or instruction used herein should be construed as critical or essential unless explicitly described as such. Also, as used herein, the articles "a" and "an" are intended to include one or more items, and may be used interchangeably with "one or more." Where only one item is intended, the term "one" or similar language is used. Also, as used herein, the terms "has," "have," "having," "include," "including," or the like are intended to be openended terms. Further, the phrase "based on" is intended to mean "based, at least in part, on" unless explicitly stated otherwise. Furthermore, expressions such as "at least one of [A] and [B]", "[A] and/or [B]", or "at least one of [A] or [B]" are to be understood as including only A, only B, or both A and B.

It is contemplated that features, advantages, and significances of example embodiments described hereinabove are merely a portion of the present disclosure, and are not intended to be exhaustive or to limit the scope of the present disclosure.

Further descriptions of the features, components, configuration, operations, and implementations of the vehicle software testing system of the present disclosure, according to one or more embodiments, are provided in the following.

### Example System Architecture

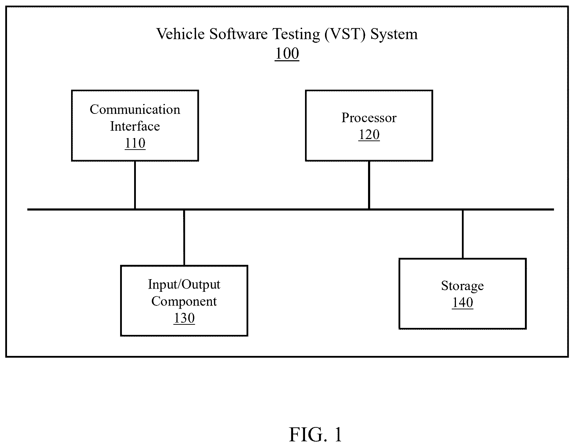

FIG. 1 illustrates a block diagram of example components in a Vehicle Software Testing (VST) system 100, according to one or more embodiments. The VST system 100 may include an apparatus, a system, a platform, a module, or the like, which may be configured to perform one or more operations or actions for testing a vehicle software.

As illustrated in FIG. 1, the VST system 100 may include at least one communication interface 110, at least one processor 120, at least one input/output component 130, and at least one storage 140, although it can be understood that the VST system 100 may include more or less components than as illustrated in FIG. 1, and/or may be arranged in a manner different from as illustrated in FIG. 1, without departing from the scope of the present disclosure.

The communication interface 110 may include at least one transceiver-like component (e.g., a transceiver, a separate receiver and transmitter, a bus, etc.) that enables the components of the VST system 100 to communicate with each other and/or to communicate with one or more components external to the VST system 100, such as via a wired connection, a wireless connection, or a combination of wired and wireless connections. For example, the communication interface 110 may include an Ethernet interface, an optical interface, a coaxial interface, an infrared interface, a radio frequency (RF) interface, a universal serial bus (USB) interface, a Wi-Fi interface, a cellular network interface, or the like.

For instance, the communication interface 110 may couple the processor 120 to the storage 140 to thereby enable them to communicate and to interoperate with each other in performing one or more operations.

According to one or more embodiments, the communication interface 110 may include one or more application programming interfaces (APIs) which allow the VST system 100 (or one or more components included therein) to communicate with one or more software applications.

The input/output component 130 may include at least one component that permits the VST system 100 to receive information and/or to provide output information. It can be understood that, in some embodiments, the input/output component 130 may include at least one input component (e.g., a touch screen display, a keyboard, a keypad, a mouse, a button, a switch, a microphone, etc.) and at least one output component (e.g., a display, a speaker, one or more light-emitting diodes (LEDs), etc.), each of which may be separated from each other. Additionally, or alternatively, the at least one input component may include a sensor for sensing information (e.g., a global positioning system (GPS) component, an accelerometer, a gyroscope, and/or an actuator).

The storage 140 may include one or more storage mediums suitable for storing data, information, and/or computer-executable instructions therein. According to example embodiments, the storage 140 may include at least one memory storage, such as a random access memory (RAM), a read only memory (ROM), and/or another type of dynamic or static storage device (e.g., a flash memory, a magnetic memory, and/or an optical memory) that stores information and/or instructions for use by the processor 120. Additionally or alternatively, the storage 140 may include a hard disk (e.g., a magnetic disk, an optical disk, a magneto-optic disk, and/or a solid state disk), a compact disc (CD), a digital versatile disc (DVD), a floppy disk, a cartridge, a magnetic tape, and/or another type of non-transitory computer-readable medium, along with a corresponding drive. A computer-readable medium is defined herein as a non-transitory memory device. A memory device includes memory space within a single physical storage device or memory space spread across multiple physical storage devices.

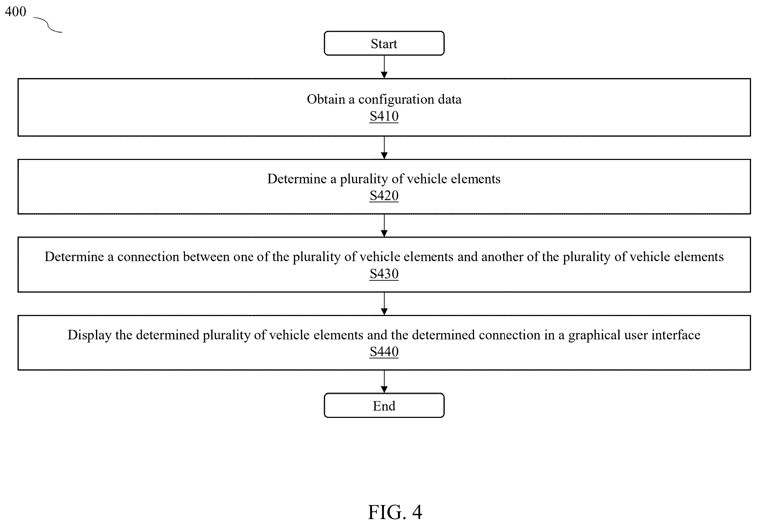

According to example embodiments, the storage 140 may be configured to store information, such as raw data, metadata, or the like. Additionally or alternatively, the storage 140 may be configured to store one or more information associated with one or more operations performed by the processor 120. For instance, the storage 140 may store information defining the historical operation(s) performed by the processor 120 to test a vehicle software, one or more results of operations performed by the processor 120, or the like. Further, the storage 140 may store data or information required in testing a vehicle software. For instance, the storage 140 may store at least a plurality of predefined elements (described below with reference to FIG. 4).

In some implementation, the storage 140 may include a plurality of storage mediums, and the storage 140 may be configured to store a duplicate or a copy of at least a portion of the information in the plurality of storage mediums, for providing redundancy and for backing-up the information or the associated data. Furthermore, the storage 140 may also store computer-readable or computer-executable instructions which, when being executed by one or more processors (e.g., processor 120), causes the one or more processors to perform one or more actions/operations described herein

The processor 120 may include at least one processor capable of being programmed or being configured to perform a function(s) or an operation(s) described herein. For instance, the processor 120 may be configured to execute computer-executable instructions stored in at least one storage medium or a memory storage (e.g., storage 140, etc.) to thereby perform one or more actions or one or more operations described herein.

According to example embodiments, the processor 120 may be configured to receive (e.g., via the communication interface 110, via the input/output component 130, etc.) one or more signals and/or one or more user inputs defining one or more instructions for performing one or more operations. Further, the processor 120 may be implemented in hardware, firmware, or a combination of hardware and software. For instance, processor 120 may include at least one of a central processing unit (CPU), a graphics processing unit (GPU), an accelerated processing unit (APU), a microprocessor, a microcontroller, a digital signal processor (DSP), a field-programmable gate array (FPGA), an application-specific integrated circuit (ASIC), and/or another type of processing or computing component.

According to example embodiments, the processor 120 may be configured to collect, to extract, and/or to receive one or more information (in the form of signal or data, etc.), and to process the received one or more information to thereby test a vehicle software.

The number and arrangement of components shown in FIG. 1 are provided as an example. In practice, VST system 100 may include additional components, fewer components, different components, or differently arranged components than those shown in FIG. 1. Additionally, or alternatively, a set of components (e.g., one or more components) of VST system 100 may perform one or more functions described as being performed by another set of components of VST system 100.

Descriptions of several example operations which may be performed by the processor 120 are provided below with reference to FIG. 4.

### Example of Vehicle Software Testing in the Present Disclosure

According to example embodiments, in order to test a vehicle software, one or more test cases may be designed and run within a test environment.

The test case may refer to a specific set of conditions and/or steps that are designed to verify the functionality or behavior of the software (or the system under test). The test case may define one or more actions and expected outcomes for a particular test scenario. The conditions and/or steps that are designed to verify the functionality or behavior of the software may be referred to as test steps included in the test case. According to example embodiments, one or more test steps may be included in a test case, which may include one or more of: a test case ID (e.g., a unique identifier or a set of numbers assigned to the test case for tracking and reference purpose), a test objective (e.g., description or specification of the goal or purpose of the test case), at least one test condition (e.g., precondition or initial state required for executing the test case, specific setup or configuration needed in order to trigger the test execution, etc.), at least one test operation (e.g., action or operation to be performed to execute the test case, necessary inputs or interactions with the software, etc.), at least one expected result (e.g., the anticipated outcomes or behaviors that are expected from the software when the test case is executed successfully, etc.), and any other suitable information.

The test environment may refer to a specific set of conditions and/or elements which the test case is to be run on (against). In particular, the test environment may include one or more vehicle elements that are involved in the test case. The one or more vehicle elements may refer to one or more elements associated with one or more components of a vehicle, such as electronic control units (ECUs), motors, and the like. For example, for a test case designed to test a software related to detecting and displaying obstacles near the vehicle's rear, the test environment may include the IVI ECU and ADAS ECU of the vehicle (one or more vehicle elements). According to example embodiments, the test environment may further include one or more environment elements that are involved in the test case. The one or more environment elements may refer to one or more elements associated with an environment of a vehicle. For example, for the test case designed to test the software related to detecting and displaying obstacles near the vehicle's rear, the test environment may further include obstacles near the vehicle's rear and rain (one or more environment elements), such that the test case may be able to evaluate the software associated with the IVI ECU and ADAS ECU of the vehicle when they are detecting and displaying obstacles near the vehicle's rear during the rain.

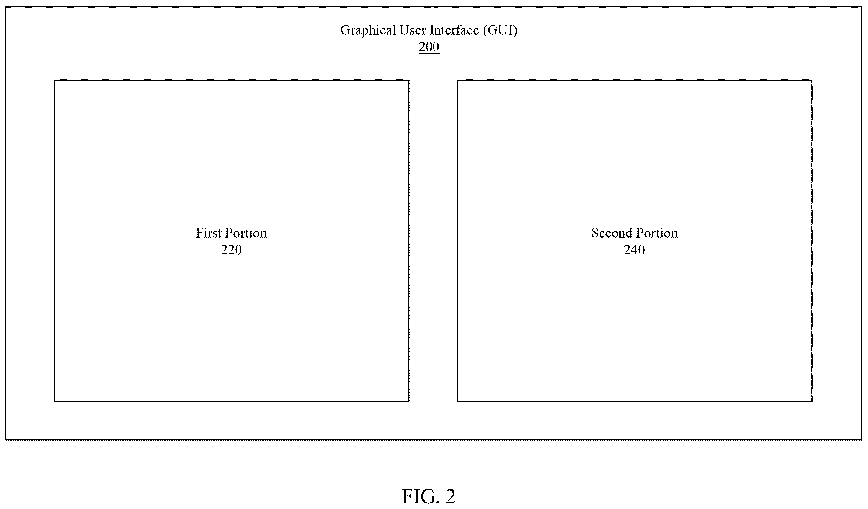

FIG. 2 illustrates example components of a graphical user interface (GUI) 200 for testing a vehicle software, according to one or more embodiments.

As shown in FIG. 2, the graphical user interface (GUI) 200 may include at least a first portion 220 and a second portion 240.

According to example embodiments, the first portion 220 may include a plurality of elements, where the plurality of elements within the first portion 220 may represent a test environment. The plurality of elements may include one or more vehicle elements and/or one or more environment elements. The one or more vehicle elements may be elements associated with one or more components of a vehicle, such as electronic control units (ECUs), motors, and the like. The one or more environment elements may be elements associated with an environment of a vehicle, such as an amount of rain, an amount of moisture, sunlight, a particular weather and the like.

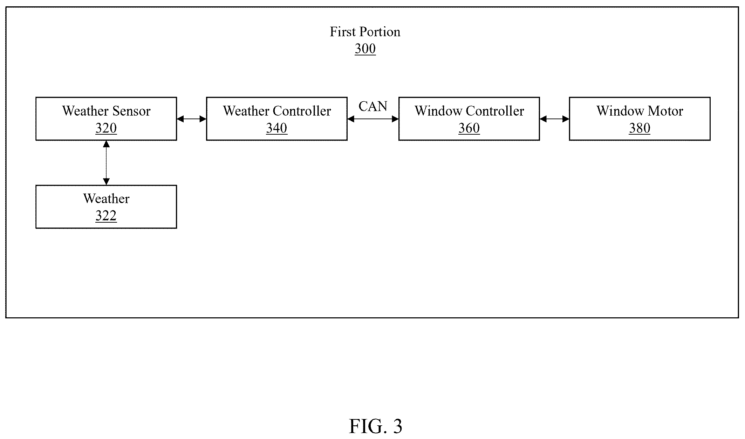

FIG. 3 illustrates example components of a first portion 300 of a graphical user interface (GUI) for testing a vehicle software, according to one or more embodiments. The first portion 300 may correspond to first portion 220 in FIG. 2, thus the features associated with the first portion 300 and the first portion 220 may be similarly applicable to each other, unless being explicitly described otherwise.

As shown in FIG. 3, the first portion 300 may include five elements: weather sensor 320, weather 322, weather controller 340, window controller 360, and window motor 380. The weather sensor 320, weather controller 340, window controller 360, and window motor 380 may correspond to the vehicle elements, and may represent weather sensor, weather controller, window controller, and window motor in a vehicle, respectively. Similarly, the weather 322 may correspond to the environment element, and may represent the weather (environment) in which the vehicle is in. It can be understood that the configuration illustrated in FIG. 3 is simplified for descriptive purpose, and is not intended to limit the scope of the present disclosure in any way. For example, in practice, the number of elements can be any.

Further, as shown in FIG. 3, each of the plurality of elements may be connected to one or more other elements, representing interactions between said elements. For example, the weather sensor 320 and the weather 322 may be connected to each other with input/output connection, representing the input/output interaction between the weather 322 outputting weather data and the weather sensor 320 inputting (receiving) the weather data from the weather 322. Similarly, the weather controller 340 and the window controller 360 may be connected to each other with CAN connection, representing CAN communication between said elements in the vehicle.

Furthermore, it may be understood that each of the plurality of elements may include data associated with the corresponding element. For example, the window motor 380 may include parametric data, such as torque, power efficiency, and the like that are associated with the window motor of a vehicle, as well as configurational data, such as interface type, shape, size, and the like associated with the window motor of a vehicle. In another example, the weather 322 may include parametric data such as an amount of rain, visibility level of fog, and the like associated with a particular type of weather.

Returning to FIG. 2, according to example embodiments, the second portion 240 may include a plurality of predefined elements that may be added into the first portion 220 (and subsequently to the test environment). The plurality of predefined elements may be elements that have been predefined and stored by a software developer, which can be searched by a user of the GUI 200.

Further, the plurality of predefined elements may include a plurality of predefined environment elements and/or a plurality of predefined vehicle elements. The plurality of predefined environment elements may include predefined elements associated with an environment of a vehicle, and the plurality of predefined vehicle elements may include predefined elements associated with one or more components of a vehicle. Further, each of the plurality of predefined elements may include predefined data associated with the corresponding element. For example, a predefined window motor element may include predefined parametric data, such as torque, power efficiency, and the like that are associated with the window motor of a vehicle, as well as predefined configurational data, such as interface type, shape, size, and the like associated with the window motor of a vehicle. In another example, the weather element may include predefined parametric data such as an amount of rain, visibility level of fog, and the like associated with a particular type of weather.

According to example embodiments, the VST system may first obtain a configuration data of a vehicle. The configuration data may include data associated with all components of the vehicle, as well as all of their configurations, interactions, logical interfaces, physical interfaces, parameters, and the like. For example, the configuration data may include data associated with all ECUs of the vehicle, as well as their configurations and interactions. According to example embodiments, the configuration data may be obtained from an application or provided by a user of the VST system.

Once the configuration data is obtained, the VST system may then determine a plurality of vehicle elements associated with the vehicle based on the obtained configuration data. For example, the VST system may determine a plurality of vehicle elements corresponding to the ECUs of the vehicle based on the obtained configuration data. The VST system may also determine a connection between each of the plurality of vehicle elements and others of the plurality of vehicle elements based on the obtained configuration data. For example, the system may determine a connection (e.g., interaction) between an ADAS ECU of the vehicle with other ECUs of the vehicle based on the obtained configuration data. Further, the VST system may also determine all data (parametric, configurational, and the like) associated with each of the plurality of vehicle elements based on the configuration data.

Once the plurality of vehicle elements are determined, the VST system may then display the determined plurality of vehicle elements and the determined connection in the first portion 220 of the GUI 200. For example, the VST system may determine the weather sensor, weather controller, window controller, and window motor elements associated with the vehicle (as well as other elements), determine their connections, and display said elements and connections in the first portion 220 in the similar manner as shown in FIG. 3. According to example embodiments, the GUI 200 may be generated at the time when the determined plurality of vehicle elements and the determined connection is displayed. According to example embodiments, the GUI 200 may be generated before the time when the determined plurality of vehicle elements and the determined connection are displayed.

It may be understood that a configuration data of a specific vehicle may include data associated with the specific components of such specific vehicle, such that the elements and connections generated therefrom (as well as the specific data associated with the elements) and displayed on the GUI represent a complete virtual model of such specific vehicle.

Accordingly, elements of a test environment associated with a specific vehicle may be created with their configurations and interactions defined automatically, without the user having to manually create and define such parameters for the vehicle elements.

In this regard, once the determined plurality of vehicle elements are displayed at the first portion 220, the user may then add, remove, and/or modify the elements within the first portion 220 in order to design a test environment.

In particular, the user may provide a selection input selecting one of the plurality of predefined elements displayed at the second portion 240, and the VST system may then display (add) the selected one of the plurality of predefined elements at the first portion 220. According to example embodiments, the user may provide the selection input by dragging and dropping an element from the second portion 240 onto the first portion 220. According to example embodiments, the user may provide the selection input by clicking on an element in the second portion 240. For example, the user may select a predefined weather element from the second portion 240, such that said predefined weather element is added to the first portion 220 (and subsequently to the test environment) in the similar manner as shown in FIG. 3.

Accordingly, elements of a test environment may be quickly added, edited, and removed, which improves the time taken to design a test environment.

According to example embodiments, the GUI 200 may further include a connection point (not shown) at each of the elements displayed at the first portion, where the user may define interactions between the elements via the connection point. In particular, the user may provide a connection input connecting an element displayed at the first portion (e.g., one of the determined plurality of vehicle elements, one of the selected one of the plurality of predefined elements, and the like) to another element displayed at the first portion (e.g., one of the determined plurality of vehicle elements, one of the selected one of the plurality of predefined elements, and the like). The connection input may be an input connecting the connection point of an element to the connection point of another element. The system may then accordingly connect the element displayed at the first portion to another element displayed at the first portion.

For example, the user may connect the weather 322 (i.e., one of the selected one of the plurality of predefined elements) to the weather sensor 320 (i.e., one of the determined plurality of vehicle elements), in order to define the interaction between said elements (i.e., the weather sensor 320 receives data (e.g., weather data) from the weather 322).

Accordingly, interactions between elements of a test environment may be quickly defined, which improves the time taken to design a test environment.

It may be understood that different vehicles may have different components (e.g., ECUs) with different configurations and interactions. For example, a vehicle of an older model may not have a weather sensor, while a vehicle of a newer model may have a weather sensor.

As such, according to example embodiments, the GUI 200 may further include a vehicle selector that displays a plurality of vehicles selectable by the user. In particular, the VST system may obtain and store a plurality of configuration data of a plurality of different vehicles, where each of the plurality of vehicles displayed at the vehicle selector may be associated with a corresponding configuration data. Once the user selects a specific vehicle from the plurality of vehicles displayed at the vehicle selector, the VST system may then determine, based on the associated configuration data, a plurality of vehicle elements associated with the selected vehicle and their connections. Subsequently, the VST system may display the determined plurality of vehicle elements and the determined connection in the first portion 220 in the similar manner as described above.

Accordingly, elements of a test environment associated with different vehicles may be created with their configurations and interactions defined automatically, without the user having to manually create and define such parameters.

In view of the above, once the test environment is designed (i.e., elements are added and their connections are defined in the first portion of the GUI ), one or more test cases may be run (executed) against the designed test environment.

It can be understood that the configuration illustrated in FIG. 2 is simplified for descriptive purpose, and is not intended to limit the scope of the present disclosure in any way. For example, in practice, the relative position, relative size, and/or shape of each of the elements within the GUI 200 can be any.

### Example Operations for Testing a Vehicle Software in the Present Disclosure

In the following, several example operations performable by the VST system of the present disclosure are described with reference to FIG. 4.

FIG. 4 illustrates a flow diagram of an example method 400 for testing a vehicle software, according to one or more embodiments. One or more operations in method 400 may be performed by at least one processor (e.g., processor 120) of the VST system.

As illustrated in FIG. 4, at operation S410, the at least one processor may be configured to obtain a configuration data of a vehicle. The configuration data may include data associated with all components of the vehicle, as well as all of their configurations, interactions, logical interfaces, physical interfaces, and the like. Further, the configuration data may be obtained from an application or provided by a user of the VST system. The method then proceeds to operation S420

At operation S420, the at least one processor may be configured to determine a plurality of vehicle elements associated with the vehicle. The plurality of vehicle elements may be determined based on the obtained configuration data, and may include elements associated with one or more components of a vehicle. According to example embodiments, the plurality of vehicle elements may include a plurality of electronic control units associated with a type of vehicle. The method then proceeds to operation S430.

At operation S430, the at least one processor may be configured to determine a connection between one of the plurality of vehicle elements and another of the plurality of vehicle elements. The connection may be determined based on the obtained configuration data, and may represent interactions between said elements. For example, the at least one processor may be configured to determine a connection between a weather controller element and a window controller element representing CAN communication between said elements in the vehicle, a connection between a window controller element and a window motor element representing input/output interaction between said elements in the vehicle, and the like. The method then proceeds to operation S440.

At operation S440, the at least one processor may be configured to display the determined plurality of vehicle elements and the determined connection in a graphical user interface.

Upon performing operation S440, the method 400 may be ended or be terminated. Alternatively, method 400 may return to operation S410, such that the at least one processor may be configured to repeatedly perform, for at least a predetermined amount of time, the obtaining the configuration data (at operation S410), the determining the plurality of vehicle elements (at operation S420), the determining the connection (at operation S430), and the displaying the determined plurality of vehicle elements and the determined connection (at operation S440). For instance, the user may continuously (or periodically) search for more test steps. Accordingly, the at least one processor may continuously (or periodically) create more test environment of the same or different vehicles, and then restart the obtaining the configuration data (at operation S410), the determining the plurality of vehicle elements (at operation S420), the determining the connection (at operation S430), and the displaying the determined plurality of vehicle elements and the determined connection (at operation S440).

According to example embodiments, the graphical user interface may include at least a first portion and a second portion, where the first portion may include the determined plurality of vehicle elements and the determined connection (determined during operation S420 and S430) and the second portion may include a plurality of predefined elements. The plurality of predefined elements may be elements that have been predefined and stored by a software developer, and may include a plurality of predefined environment elements (elements associated with an environment of a vehicle) and/or a plurality of predefined vehicle elements.

In this regard, according to example embodiments, the at least one processor may be configured to receive a selection input selecting one of the plurality of predefined elements from the user. According to example embodiments, the selection input may include a drag-and-drop input. According to example embodiments, the selection input may include a click input. Subsequently, in response to receiving the selection input, the at least one processor may be configured to display (add) the selected one of the plurality of predefined elements at the first portion.

According to example embodiments, the at least one processor may be configured to receive, from the user, a connection input connecting an element displayed at the first portion to another element displayed at the first portion. Subsequently, in response to receiving the connection input, the at least one processor may be configured to connect the element displayed at the first portion to another element displayed at the first portion. According to example embodiments, the graphical user interface may include a connection point at each of the elements displayed at the first portion, where the user may define interactions between the elements via the connection point. As such, according to example embodiments, the connection input may include an input connecting the connection point of an element to the connection point of another element.

According to example embodiments, the graphical user interface may include a vehicle selector. The vehicle selector may include a plurality of vehicles selectable by the user, where each of the plurality of vehicles displayed at the vehicle selector may be associated with a configuration data of a corresponding vehicle.

In this regard, according to example embodiments, the at least one processor may be configured to obtain a plurality of configuration data of the plurality of vehicles, and receive a selection input selecting one of the plurality of vehicles at the vehicle selector from the user. According to example embodiments, the selection input may include a click input. Subsequently, in response to receiving the selection input, the at least one processor may be configured to determine a plurality of vehicle elements associated with the selected one of the plurality of vehicles and their connections, and generate the graphical user interface comprising the determined plurality of vehicle elements and the determined connection in the similar manner as described above. In other words, the plurality of vehicle elements and the connections that are determined during operation S420 and S430 and displayed in the graphical user interface during operation S440 are associated with the selected one of the plurality of vehicles.

### Various Aspects of Embodiments

The foregoing disclosure provides illustration and description, but is not intended to be exhaustive or to limit the implementations to the precise form disclosed. Modifications and variations are possible in light of the above disclosure or may be acquired from practice of the implementations.

Some embodiments may relate to a system, a method, and/or a computer readable medium at any possible technical detail level of integration. Further, one or more of the above components described above may be implemented as instructions stored on a computer readable medium and executable by at least one processor (and/or may include at least one processor). The computer readable medium may include a computer-readable non-transitory storage medium (or media) having computer readable program instructions thereon for causing a processor to carry out operations.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program code/instructions for carrying out operations may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects or operations.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer readable media according to various embodiments. In this regard, each block in the flowchart or block diagrams may represent a microservice(s) module, segment, or portion of instructions, which comprises one or more executable instructions for implementing the specified logical function(s). The method, computer system, and computer readable medium may include additional blocks, fewer blocks, different blocks, or differently arranged blocks than those depicted in the Figures. In some alternative implementations, the functions noted in the blocks may occur out of the order noted in the Figures. For example, two blocks shown in succession may, in fact, be executed concurrently or substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

It will be apparent that systems and/or methods, described herein, may be implemented in different forms of hardware, firmware, or a combination of hardware and software. The actual specialized control hardware or software code used to implement these systems and/or methods is not limiting of the implementations. Thus, the operation and behavior of the systems and/or methods were described herein without reference to specific software code-it being understood that software and hardware may be designed to implement the systems and/or methods based on the description herein.

It can be understood that numerous modifications and variations of the present disclosure are possible in light of the above teachings. It will be apparent that within the scope of the appended clauses, the present disclosures may be practiced otherwise than as specifically described herein.

## Claims

1. A system comprising:
a memory storage storing computer-executable instructions; and
at least one processor communicatively coupled to the memory storage, wherein the at least one processor is configured to execute the instructions to:
obtain a configuration data of a vehicle;
determine a plurality of vehicle elements associated with the vehicle based on the obtained configuration data;
determine a connection between one of the plurality of vehicle elements and another of the plurality of vehicle elements based on the obtained configuration data; and
display the determined plurality of vehicle elements and the determined connection in a graphical user interface.

2. The system according to claim 1, wherein:
the graphical user interface comprises at least a first portion and a second portion;
the first portion comprises the determined plurality of vehicle elements and the determined connection;
the second portion comprises a plurality of predefined elements; and
the at least one processor is further configured to execute the instructions to:
receive a selection input selecting one of the plurality of predefined elements from a user; and
in response to receiving the selection input, display the selected one of the plurality of predefined elements at the first portion.

3. The system according to claim 2, wherein the at least one processor is further configured to execute the instructions to:
receive, from the user, a connection input connecting an element displayed at the first portion to another element displayed at the first portion; and
in response to receiving the connection input, connect the element displayed at the first portion to another element displayed at the first portion.

4. The system according to claim 2 or 3, wherein the plurality of predefined elements comprise a plurality of predefined elements associated with an environment of a vehicle and/or a plurality of predefined vehicle elements.

5. The system according to any one of claims 1 to 4, wherein the plurality of vehicle elements comprise a plurality of electronic control units associated with a type of vehicle.

6. The system according to any one of claims 1 to 5, wherein:
the graphical user interface comprises a vehicle selector; and
the vehicle selector comprises a plurality of vehicles selectable by a user.

7. The system according to claim 6, wherein the at least one processor is further configured to execute the instructions to:
obtain a plurality of configuration data of the plurality of vehicles; and
receive a selection input selecting one of the plurality of vehicles at the vehicle selector from the user;
wherein the determined plurality of vehicle elements and the determined connection are associated with the selected one of the plurality of vehicles.

8. A method comprising:
obtaining a configuration data of a vehicle;
determining a plurality of vehicle elements associated with the vehicle based on the obtained configuration data;
determining a connection between one of the plurality of vehicle elements and another of the plurality of vehicle elements based on the obtained configuration data; and
displaying the determined plurality of vehicle elements and the determined connection in a graphical user interface.

9. The method according to claim 8, wherein:
the graphical user interface comprises at least a first portion and a second portion;
the first portion comprises the determined plurality of vehicle elements and the determined connection;
the second portion comprises a plurality of predefined elements; and
the method further comprises:
receiving a selection input selecting one of the plurality of predefined elements from a user; and
in response to receiving the selection input, displaying the selected one of the plurality of predefined elements at the first portion.

10. The method according to claim 9, further comprising:
receiving, from the user, a connection input connecting an element displayed at the first portion to another element displayed at the first portion; and
in response to receiving the connection input, connecting the element displayed at the first portion to another element displayed at the first portion.

11. The method according to claim 9 or 10, wherein the plurality of predefined elements comprise a plurality of predefined elements associated with an environment of a vehicle and/or a plurality of predefined vehicle elements.

12. The method according to any one of claims 8 to 11, wherein the plurality of vehicle elements comprise a plurality of electronic control units associated with a type of vehicle.

13. The method according to any one of claims 8 to 12, wherein:
the graphical user interface comprises a vehicle selector; and
the vehicle selector comprises a plurality of vehicles selectable by a user.

14. The method according to claim 13, further comprising:
obtaining a plurality of configuration data of the plurality of vehicles; and
receiving a selection input selecting one of the plurality of vehicles at the vehicle selector from the user;
wherein the determined plurality of vehicle elements and the determined connection are associated with the selected one of the plurality of vehicles.

15. A computer program to cause at least one processor to perform a method comprising:
obtaining a configuration data of a vehicle;
determining a plurality of vehicle elements associated with the vehicle based on the obtained configuration data;
determining a connection between one of the plurality of vehicle elements and another of the plurality of vehicle elements based on the obtained configuration data; and
displaying the determined plurality of vehicle elements and the determined connection in a graphical user interface.
